(19) Europäisches Patentamt
European Patent Office
Office européen des brevets

(11) **EP 2 561 411 B1**

(12) **EUROPEAN PATENT SPECIFICATION**

(45) Date of publication and mention
of the grant of the patent:
**04.11.2020 Bulletin 2020/45**

(51) Int Cl.:
***G05B 13/04*** *(2006.01)*

(21) Application number: **11722510.2**

(86) International application number:
**PCT/IB2011/000845**

(22) Date of filing: **19.04.2011**

(87) International publication number:
**WO 2011/132050 (27.10.2011 Gazette 2011/43)**

(54) **A METHOD AND SYSTEM FOR UPDATING A MODEL IN A MODEL PREDICTIVE CONTROLLER**

VERFAHREN UND SYSTEM ZUR AKTUALISIERUNG EINES MODELLS BEI EINER MODELLPRÄDIKTIVEN STEUERUNG

PROCÉDÉ ET SYSTÈME POUR METTRE À JOUR UN MODÈLE DANS UN DISPOSITIF DE COMMANDE PRÉDICTIF À MODÈLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2010 IN 1086CH2010**

(43) Date of publication of application:
**27.02.2013 Bulletin 2013/09**

(73) Proprietor: **ABB Schweiz AG**
**5400 Baden (CH)**

(72) Inventors:
• **BADWE, Abhijit**
**IN-411016 Pune (IN)**
• **KUBAL, Nandkishor**
**IN-411033 Pune (IN)**
• **BHAT, Shrikant**
**IN-440015 Nagpur (IN)**
• **NANDOLA, Naresh, Naranbhai**
**IN-363410 Gu arat (IN)**

(74) Representative: **Zimmermann & Partner**
**Patentanwälte mbB**
**Postfach 330 920**
**80069 München (DE)**

(56) References cited:
**WO-A1-2008/119008     US-A1- 2009 198 350**

**Description**

**FIELD OF THE INVENTION**

The invention relates to a Model Predictive Control (MPC), and more particularly to a method and a system for updating a model in a Model Predictive Controller.

**BACKGROUND**

In a process control industry, Advanced Process Control (APC) is employed so as to reduce operating costs, achieve high productivity, maintain quality consistently, and for other similar reasons. APC allow transition from present operating schema to an improved and more productive operating schema of the process control industry, and also accommodate operating and design constraints of the process involved in the process control industry.

Generally, a multivariable APC implements a more popular advanced multivariable control scheme called Model Predictive Control (MPC) in Multivariable Predictive Controllers. MPCs uses a mathematical model of the process involved in the process plant, in order to predict the future dynamic behavior of the process and accordingly provide optimal manipulated variables for the process and operation of the plant thereof. From this, it can be understood that accuracy of the model is a key element in effective and successful implementation of MPC.

Practically, plant dynamics changes, resulting in a mismatch between the model and the plant. This mismatch is termed as Model Plant Mismatch (MPM). MPM leads to inaccurate predictions of the plant dynamics. Using APC having model impacted by the said MPM will degrade the MPC and overall control performance thereof, which consequently alters the product quality and causes economic losses.

It becomes important to update the model upon detection of poor performance of the controller, in order to eliminate the performance degradation of the controller. Poor performance of the controller can be detected by well established MPC performance monitoring. For instance, a simple approach could be to analyse the prediction errors, which being the difference between the model predictions and true outputs. After the detection of poor performance of the controller, cause for the same, such as poor model (i.e. MPM), unmeasured disturbance, and constraint saturation etc. can be identified and diagnosed using established diagnosis techniques.

Currently, upon identification or detection of poor model, MPM is diagnosed by and after re-identification of model. Re-identification of model involves designing the perturbation signal, deciding and/or considering the operating conditions of the plant during perturbation, choosing appropriate model and estimating model parameters. This requires high degree of expertise and is quite time consuming. Also, more importantly, it involves longer perturbation period, by which a large amount or number of product with low quality, usually termed as off spec product are produced during the perturbation period. Thus, there is a need for an alternative method that significantly reduces perturbation period and more efficiently reduces and/or eliminates MPM. WO 2008/119008 A1 discloses a method for modifying a dynamic model of a process in a plant.

**OBJECTS OF THE INVENTION**

It is an object of the invention to reduce the perturbation period during diagnosis of MPM for reducing and/or eliminating MPM.

It is another object of the invention to reduce the MPM more efficiently.

**SUMMARY OF THE INVENTION**

The invention is claimed in the independent claims 1 and 8. The invention is aimed at providing a method and system for updating a model in a model predictive controller of a process plant, so as to reduce and/or eliminate the deviation of the operating performance level from the desired performance level of the process plant arising out of MPM.

Accordingly, the invention provides a method for model update in a model predictive controller. The method comprises the steps of assessing the deviation of the operating performance level from the desired performance level of the process plant. Diagnosing the model predictive control (MPC) for the model plant mismatch (MPM) is performed by updating the model in a model predictive controller and of the MPC thereof. Diagnosing the said MPC comprises determining the model prediction error in relation to MPM. Determining the model prediction error in relation to MPM includes: adding white noise to the set point values of the controllers in the process plant, providing set points with white noise to the controllers in the process plant and to the existing model of the MPC, and estimating the model prediction error by calculating the difference between the output value of the process plant and of the existing model of the MPC. Then, quantifying the MPM and updating the model in the said model predictive controller. Accordingly, the invention also provides a system for updating a model in a model predictive controller in accordance with the method of the invention. The system comprises a performance monitor unit for monitoring the performance of the MPC, a detection unit for detecting the cause for deviation of the operating performance level from the desired performance level of the process plant and a white noise generator unit for generating white noise signals that are characteristically only sufficient to compute *m+1* non-zero lag correlation coefficients, where *m* is number of manipulated variables of MPC. An estimator unit is provided for estimating the model prediction error by calculating the difference between the output value of the controllers in the process plant and of the existing model of the MPC. Also, a quantifier unit is provided for quantifying the MPM. Further, the system has an updater unit for providing an updated model based on the quantified MPM and for updating the model of the process plant in the model predictive controller.

## BRIEF DESCRIPTION OF THE DRAWINGS

With reference to the accompanying drawings in which:

Fig. 1 depicts a typical model predictive control setup in a process plant; and
Fig. 2 shows a framework for model update in model predictive controller, in accordance with the invention.

## DETAILED DESCRIPTION

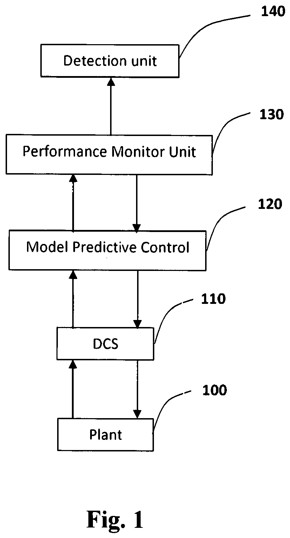

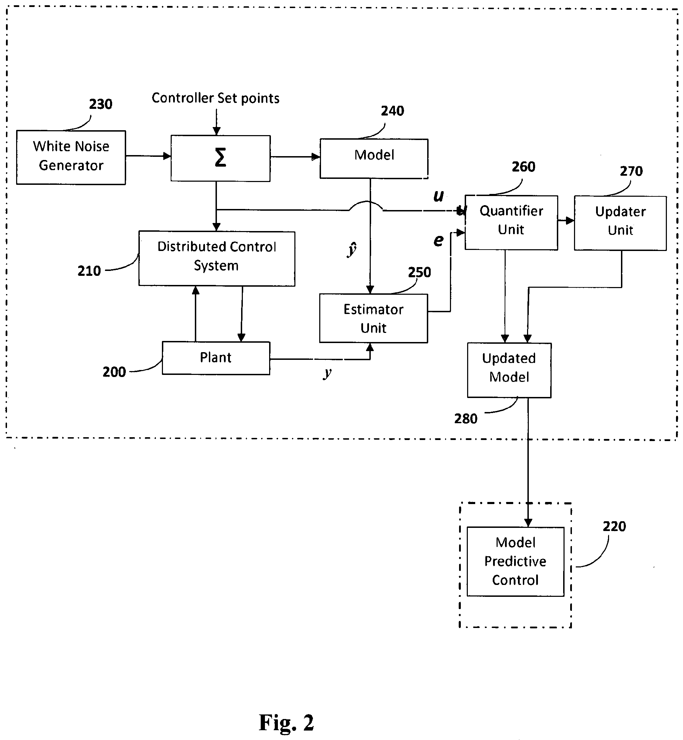

The invention is described with reference to Figs. 1 and 2 by way of illustration of non exhaustive exemplary embodiment.

In Fig. 1, process plant (100) is controlled by primary level controllers such as PID controllers etc., in a distributed control system, DCS (110). There is provided a model predictive control (120) which uses a mathematical model of the process involved in the process plant, hereinafter referred to as model, in order to predict the future dynamic behavior of the process and accordingly provide optimal manipulated variables for the process and operation of the plant thereof. A performance monitor unit (130) is provided for monitoring the performance of the MPC (120). Further, the detection unit (140) detects the cause for deviation of the operating performance level from the desired performance level of the process plant.

Considering, the deviation mentioned herein above has been caused by or arising due to model plant mismatch (MPM), being the mismatch between model and the process plant, this invention is further explained with relevance to open loop condition of the process plant, which consideration is not restrictive in nature rather purely exemplary for the purpose of better understanding.

It becomes imperative to diagnose MPC for the MPM. Further reference is herein made to Fig. 2 in order to describe the invention. Diagnose or diagnosis referred herein also includes effecting necessary correction in the model (240) of the MPC (220) with relevance to correcting the said deviation and of the MPM thereof.

Accordingly, the MPC (220) is taken offline with the set point values to the controllers being either constant with predetermined values or that evolved from the MPC (220) immediately before taking the MPC (220) offline. The MPC (220) is construed to be online in the latter case, where the set points for the controllers are the manipulated variables of the MPC (220). A white noise generator unit (230) is provided for generating white noise signals that are characteristically only sufficient to compute (m+1, where m is number of manipulated variables of MPC) non-zero lag correlation coefficients between the model prediction errors, e and the manipulated variables, u of the MPC. The white noise signal is added to the set points as follows:

$$(SP_i)_{DCS,t} = SP_i(t) + w_i(t)$$

Here $SP_i(t)$ is the $i^{th}$ setpoint value when the MPC is in "Offline" mode, $w_i(t)$ is the value in the $i^{th}$ white noise sequence at time instant t and $(SP_i)_{DCS,t}$ is the $i^{th}$ setpoint value going to the DCS (210). It should be noted here that in the event of MPC (220) being "Online", $SP_i(t)$ is computed by MPC (220) and hence is a manipulated variable of the MPC (220). Also, in the MPC (220) "Online" mode,

$$(SP_i)_{DCS,t} = SP_i(t) = MV_i(t)$$

The $(SP_i)_{DCS,t}$ values are also passed to the existing Model (240), outputs of which are denoted by $\hat{y}$, which are predicted values of controlled variables. The actual values of controlled variables from plant (200) are denoted by y. The controlled variable values from the plant (200) may be obtained through online measurements or through other suitable means such as periodic laboratory analysis. The difference between the measured value y and that predicted by the model (240), $\hat{y}$ is known as the model prediction error or model residual and is denoted by **e.** Note that in Figure

2, $(SP_i)_{DCS,t}$ is denoted by **u** for notational simplicity.

Quantifier unit (260) calculates the lag correlation coefficients between **e** and **u**. The values of these coefficients are used to calculate the "gap" between the existing model and the current plant, ie to quantify the MPM.

Considering a single input and single output open loop condition of a process plant, for the purpose of simplicity in understanding, the following case for gain mismatch is explained. This is in no way restrictive and is purely exemplary and non exhaustive with regard to the invention. Similarly, the invention holds good for multi input and multi output as well as closed loop conditions also and can be applied coextensively.

For a first order time delay system, the polynomial representation is as follows:

$$y(k) = ay(k\text{-}1) + bu(k\text{-}t_{dp}\text{-}1) + \vartheta(k)$$

$$\hat{y}(k) = a_m \hat{y}(k\text{-}1) + b_m u(k\text{-}t_{dm}\text{-}1)$$

where $y(k)$ is the output of the plant; $\hat{y}(k)$ is the output of the model; and $e(k)$ is the model error;
$a$ and $b$ are the parameters of the plant; $a_m$ and $b_m$ are the parameters of the model;
$k$ is the sampling instance;
$t_{dp}$ is the time delay for plant; $t_{dm}$ is the time delay for model

Considering only gain mismatch (i.e. $a= a_m$ and $t_{dp}=t_{dm}$)

$$e(k) = y(k) \text{-} \hat{y}(k) = ae(k\text{-}1) + (b\text{-}b_m)u(k\text{-}t_{dp}\text{-}1) + \vartheta(k) \tag{1}$$

It is to be noted that even if there is a mismatch in all the three parameters i.e. a,b and $t_d$, the method of the invention can be applied. For simplicity reason mismatch in only one parameter i.e. gain or b and $b_m$ is considered.

Now, the correlation coefficient at lag m between two time-series $x_1$ and $x_2$ is given by,

$$r_m = \frac{E\,[x_1(k)x_2(k\text{-}m)]}{\sigma_{x1}\,\sigma_{x2}}$$

$$r'_m = r_m\,\sigma_{x1}\,\sigma_{x2} = E\,[x_1(k)x_2(k\text{-}m)]$$

Then, from Equation 1,
At lag 0, $r'_0 = E\,[e(k)u(k)] = 0$
At lag 1, $r'_1 = E\,[e(k)u(k\text{-}1)] = 0$
At lag $t_{dp} + 1$, $r'_{tdp}+1 = E\,[e(k)u(k\text{-}t_{dp}\text{-}1)] = (b\text{-}b_m)\,\sigma^2$
At lag $t_{dp} + 2$, $r'_{tdp}+1 = E\,[e(k)u(k\text{-}t_{dp}\text{-}2)] = a(b\text{-}b_m)\,\sigma^2$
At lag $t_{dp} + n$, $r'_{tdp}+n = E\,[e(k)u(k\text{-}t_{dp}\text{-}n)] = a^{n\text{-}1}(b\text{-}b_m)\sigma^2$

Thus, the first non-zero correlation coefficient is observed at lag $t_{dp}+1$. Moreover, the correlation shows an exponential decay.

Now, suppose $\hat{r}_{tdp+1}$ is the correlation coefficient observed between **e** and **u** at lag $t_{dp}+1$. We can then write,

$$\hat{r}_{tdp+1} = \frac{(b\text{-}b_m)\,\sigma^2}{\sigma_e\sigma}$$

Here, $b\text{-}b_m$ is the MPM quantitatively.

An updater unit (270) updates the existing model (240) to an updated model (280) based on the quantified MPM and updates the model of the MPC (220) in the model predictive controller. The MPC (220) is then switched to online mode.

The invention can also be extended to updating a sub model in the similar manner as described herein before in the description. The identification of the sub model that needs to be updated due to MPM can be accomplished by known techniques such as that which applies partial correlation analysis or any other suitable techniques or method. This way, updating the model at sub model level further reduces the effort in updating the model for MPM and becomes more efficient.

Thus the invention can be applied for updating the entire model or the sub model as the case may be.

The invention finds extensive usage in chemical and petrochemical, cement, pulp and paper, and pharmaceutical industries to name a few. Some of the other applications include power generation, supply chain management and behavioural health etc.

**Claims**

1. A method for updating a model of a process plant in a model predictive controller of a distributed control system of the process plant, the method comprising:

    a) assessing a deviation of the operating performance level from a desired performance level of the process plant;
    b) diagnosing a model predictive control (MPC) for a model plant mismatch (MPM), by updating the model in the model predictive controller and of the MPC thereof; wherein diagnosing the said MPC is **characterized by** the following steps:

        i) determining model prediction errors in relation to MPM, wherein determining the model prediction errors in relation to MPM comprises

            - adding white noise to manipulated variables of the MPC in the process plant,
            - providing set points with white noise to the controllers in the process plant and to the model of the MPC, and
            - estimating the model prediction errors by calculating the difference between output values of the process plant and of an existing model of the MPC;

        ii) quantifying the MPM using non zero lag correlation coefficients between the model prediction errors and each of the manipulated variables of the MPC, said manipulated variables of the MPC being the set point values with added white noise of the controllers in the process plant; and
        iii) updating the model in the said model predictive controller for operation of the process plant.

2. The method as claimed in claim 1, wherein assessing the deviation of the operating performance level from the desired performance level of the process plant includes monitoring a performance of the said MPC; and detecting a cause for the said deviation, the said deviation of the operating performance level from the desired performance level of the process plant corresponds to MPM.

3. The method as claimed in claim 1, wherein diagnosing the said MPC includes correcting the said deviation of the operating performance level from the desired performance level of the process plant by correcting the model of the said MPC for the MPM and of the said MPC thereof.

4. The method as claimed in any of claims 1 or 3, wherein said manipulated variables of the MPC being the set point values of the controllers in the process plant and include white noise.

5. The method as claimed in any one of the preceding claims, wherein the model update is performed offline or online.

6. The method as claimed in any one of the preceding claims, wherein the process involved in the process plant is open loop or closed loop.

7. The method as claimed in any one of the preceding claims, wherein the said model includes an entire model of the process plant and/or a sub model thereof.

8. A system for updating a model of a process plant in a model predictive controller of a distributed control system of the process plant, the said system comprising:

    a performance monitor unit for monitoring performance of a model predictive control (MPC);
    a detection unit for detecting a cause for deviation of an operating performance level from a desired performance level of the process plant; **characterized by** the following features:

a white noise generator unit for generating white noise signals that are sufficient to compute non-zero lag correlation coefficients, the white noise generator being configured for adding white noise to manipulated variables of the MPC in the process plant;

an estimator unit for estimating a model prediction error by calculating a difference between an output value of the controllers in the process plant and of an existing model of the MPC;

a quantifier unit for quantifying a model plant mismatch (MPM) from the estimated model prediction error; and

an updater unit for providing an updated model of the process plant based on the quantified MPM and for updating the model of the process plant in the model predictive controller.

**Patentansprüche**

1. Verfahren zum Aktualisieren eines Modells einer Prozessanlage in einer Modellprädiktiven-Steuerung eines verteilten Steuerungssystems der Prozessanlage, wobei das Verfahren umfasst:

a) Bewerten einer Abweichung des Betriebsleistungsniveaus von einem gewünschten Leistungsniveau der Prozessanlage;

b) Diagnostizieren einer Modellprädiktiven Regelung (MPC) für eine Modellanlagen-Fehlanpassung (MPM) durch Aktualisieren des Modells in der Modellprädiktiven Steuerung und der MPC davon; wobei das Diagnostizieren der MPC durch die folgenden Schritte gekennzeichnet ist:

i) Bestimmen von Modellprädiktionsfehlern in Bezug auf MPM, wobei die Bestimmung der Modellprädiktionsfehler in Bezug auf MPM umfasst

- Hinzufügen von weißem Rauschen zu Stellgrößen der MPC in der Prozessanlage,
- Bereitstellung von Sollwerten mit weißem Rauschen für die Regler in der Prozessanlage und für das Modell der MPC, und
- Abschätzen der Modellprädiktionsfehler durch Berechnung der Differenz zwischen Ausgabewerten der Prozessanlage und einem bestehenden Modell der MPC;

ii) Quantifizieren der MPM unter Verwendung von Korrelationskoeffizienten ohne Null-Verzögerung zwischen den Modellprädiktionsfehlern und jeder der Stellgrößen der MPC, wobei die Stellgrößen der MPC die Sollwerte mit zusätzlichem weißen Rauschen der Regler in der Prozessanlage sind; und

iii) Aktualisieren des Modells in der genannten Modellprädiktiven Steuerung für den Betrieb der Prozessanlage.

2. Verfahren nach Anspruch 1, bei dem das Bewerten der Abweichung des Betriebsleistungsniveaus von dem gewünschten Leistungsniveau der Prozessanlage die Überwachung einer Leistung der genannten MPC und die Feststellung einer Ursache für die genannte Abweichung umfasst, wobei die genannte Abweichung des Betriebsleistungsniveaus von dem gewünschten Leistungsniveau der Prozessanlage dem MPM entspricht.

3. Verfahren nach Anspruch 1, wobei das Diagnostizieren der genannten MPC das Korrigieren der genannten Abweichung des Betriebsleistungsniveaus von dem gewünschten Leistungsniveau der Prozessanlage durch Korrigieren des Modells der genannten MPC für das MPM und der genannten MPC davon umfasst.

4. Verfahren nach einem der Ansprüche 1 oder 3, bei dem die Stellgrößen der MPC die Sollwerte der Regler in der Prozessanlage sind und weißes Rauschen enthalten.

5. Die Methode, nach einem der vorhergehenden Ansprüche, wobei das Aktualisieren des Modells offline oder online durchgeführt wird.

6. Das Verfahren nach einem der vorhergehenden Ansprüche, wobei der in der Prozessanlage angewandte Prozess ein offener oder geschlossener Kreislauf ist.

7. Das Verfahren nach einem der vorhergehenden Ansprüche, wobei das genannte Modell ein Gesamtmodell der Prozessanlage und/oder ein Teilmodell davon umfasst.

8. Ein System zum Aktualisieren eines Modells einer Prozessanlage in einer Modellprädiktiven-Steuerung eines verteilten Steuerungssystems der Prozessanlage, wobei das System umfasst:

eine Leistungsüberwachungseinheit zur Überwachung der Leistung einer Modellprädiktiven Regelung (MPC);
eine Erfassungseinheit zum Erfassen einer Ursache für eine Abweichung eines Betriebsleistungsniveaus von einem gewünschten Leistungsniveau der Prozessanlage; **gekennzeichnet durch** die folgenden Merkmale:
eine Generatoreinheit für weißes Rauschen zum Erzeugen von Signalen mit weißem Rauschen, die ausreichen, um Korrelationskoeffizienten zu berechnen, die nicht Null-Verzögerungs-Korrelationskoeffizienten sind, wobei der Generator für weißes Rauschen so konfiguriert ist, dass er weißes Rauschen zu Stellgrößen der MPC in der Prozessanlage hinzufügt;
eine Schätzeinheit zum Abschätzen eines Modellprädiktionsfehlers durch Berechnung einer Differenz zwischen einem Ausgabewert der Regler in der Prozessanlage und einem bestehenden Modell der MPC;
eine Quantifizierungseinheit zum Quantifizieren einer Modellanlagen-Fehlanpassung (MPM) anhand des abgeschätzten Modellprädiktionsfehlers; und
eine Aktualisierungseinheit zur Bereitstellung eines aktualisierten Modells der Prozessanlage auf der Grundlage des quantifizierten MPM und zum Aktualisieren des Modells der Prozessanlage in der Modellprädiktiven Steuerung.

## Revendications

1. Procédé de mise à jour d'un modèle d'une installation de traitement dans un contrôleur prédictif de modèle d'un système de commande distribué de l'installation de traitement, le procédé comprenant :

a) l'évaluation d'une déviation du niveau de performance de fonctionnement par rapport à un niveau de performance souhaité de l'installation de traitement ;
b) le diagnostic d'une commande prédictive de modèle (MPC) pour une discordance d'installation à modèle (MPM), par mise à jour du modèle dans le contrôleur prédictif de modèle et de la MPC de celui-ci ; dans lequel le diagnostic de ladite MPC est **caractérisé par** les étapes suivantes :

i) la détermination d'erreurs de prédiction de modèle par rapport à la MPM, dans lequel la détermination des erreurs de prédiction de modèle par rapport à la MPM comprend

- l'ajout de bruit blanc à des variables manipulées de la MPC dans l'installation de traitement,
- la fourniture de points de consigne avec du bruit blanc aux contrôleurs dans l'installation de traitement et au modèle de la MPC, et
- l'estimation des erreurs de prédiction de modèle en calculant la différence entre des valeurs de sortie de l'installation de traitement et d'un modèle existant de la MPC ;

ii) la quantification de la MPM en utilisant des coefficients de corrélation à décalage non nul entre les erreurs de prédiction de modèle et chacune des variables manipulées de la MPC, lesdites variables manipulées de la MPC étant les valeurs de point de consigne avec bruit blanc ajouté des contrôleurs dans l'installation de traitement ; et
iii) la mise à jour du modèle dans ledit contrôleur prédictif de modèle pour un fonctionnement de l'installation de traitement.

2. Procédé selon la revendication 1, dans lequel l'évaluation de la déviation du niveau de performance de fonctionnement par rapport au niveau de performance souhaité de l'installation de traitement inclut la surveillance d'une performance de ladite MPC ; et la détection d'une cause pour ladite déviation, ladite déviation du niveau de performance de fonctionnement par rapport au niveau de performance souhaité de l'installation de traitement correspond à la MPM.

3. Procédé selon la revendication 1, dans lequel le diagnostic de ladite MPC inclut la correction de ladite déviation du niveau de performance de fonctionnement par rapport au niveau de performance souhaité de l'installation de traitement en corrigeant le modèle de ladite MPC pour la MPM et de ladite MPC de celle-ci.

4. Procédé selon l'une quelconque des revendications 1 ou 3, dans lequel lesdites variables manipulées de la MPC sont les valeurs de point de consigne des contrôleurs dans l'installation de traitement et incluent du bruit blanc.

**5.** Procédé selon l'une quelconque des revendications précédentes, dans lequel la mise à jour de modèle est mise en œuvre hors ligne ou en ligne.

**6.** Procédé selon l'une quelconque des revendications précédentes, dans lequel le traitement impliqué dans l'installation de traitement est une boucle ouverte ou une boucle fermée.

**7.** Procédé selon l'une quelconque des revendications précédentes, dans lequel ledit modèle inclut un modèle entier de l'installation de traitement et/ou un sous-modèle de celle-ci.

**8.** Système de mise à jour d'un modèle d'une installation de traitement dans un contrôleur prédictif de modèle d'un système de commande distribué de l'installation de traitement, ledit système comprenant :

une unité de surveillance de performance pour la surveillance de performance d'une commande prédictive de modèle (MPC) ;
une unité de détection pour détecter une cause de déviation d'un niveau de performance de fonctionnement par rapport à un niveau de performance souhaité de l'installation de traitement ; **caractérisé par** les caractéristiques suivantes :

une unité de génération de bruit blanc pour générer des signaux de bruit blanc qui sont suffisants pour calculer des coefficients de corrélation de décalage non nul, le générateur de bruit blanc étant configuré pour ajouter du bruit blanc à des variables manipulées de la MPC dans l'installation de traitement ;
une unité d'estimation pour estimer une erreur de prédiction de modèle en calculant une différence entre une valeur de sortie des contrôleurs dans l'installation de traitement et d'un modèle existant de la MPC ;
une unité de quantification pour quantifier une discordance d'installation à modèle (MPM) par rapport à l'erreur de prédiction de modèle estimée ; et
une unité de mise à jour pour fournir un modèle mis à jour de l'installation de traitement sur la base de la MPM quantifiée et pour mettre à jour le modèle de l'installation de traitement dans le contrôleur prédictif de modèle.

140

Detection unit

130

Performance Monitor Unit

120

Model Predictive Control

110

DCS

100

Plant

**Fig. 1**

Fig. 2

**EP 2 561 411 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008119008 A1